# EUROPEAN PATENT SPECIFICATION

(11) **EP 4 195 471 B1**
(45) Date of publication and mention of the grant of the patent: **02.09.2026**
(21) Application number: 21275182.0
(22) Date of filing: 10.12.2021
(51) Int. Cl.: H02K 11/26, H02K 11/02

(54) **ELECTRIC MOTOR WITH TRANSMISSION LINE TERMINATION AND METHOD OF PROTECTING ELECTRIC MOTOR**
ELEKTROMOTOR MIT ÜBERTRAGUNGSLEITUNGSABSCHLUSS AND SCHUTZVERVERFAHREN FÜR ELEKTROMOTOR
MOTEUR ÉLECTRIQUE AVEC TERMINAISON DE LIGNE DE TRANSMISSION ET PROCÉDÉ DE PROTECTION POUR MOTEUR ÉLECTRIQUE

(43) Date of publication of application: 14.06.2023
(73) Proprietor: Hamilton Sundstrand Corporation, Charlotte, NC 28217 (US)
(72) Inventor: ROADLEY-BATTIN, Jonathan, Birmingham (GB); PAGE, Andrew E, Tring (GB)
(74) Representative: Dehns

(56) References cited:
- EP-A1- 3 135 915
- WO-A1-2020/115418
- CN-A- 105 228 369
- "IEEE Recommended Practice for Powering and Grounding Electronic Equipment;IEEE Std 1100-2005 (Revision of IEEE Std 1100-1999)", 24 May 2006, IEEE STANDARD, IEEE, Piscataway, NJ, USA, ISBN: 978-0-7381-4978-3, pages: 551 - 555, XP002806434

## Description

### TECHNICAL FIELD

The present disclosure is concerned with an improved arrangement for providing transmission line termination for high power density motors.

### BACKGROUND

High power density motors and drives are used in many applications e.g. for electric propulsion, fuel pumping, actuation and other applications. Such high power density motors and drives are able to replace traditional hydraulic and pneumatic drives with electrical power to improve system functionality, reliability and maintainability. This has proved beneficial in many fields e.g. in aircraft where the trend is towards more electric aircraft, MEA, or all electric aircraft, AEA. Such drives/motors may operate at a high fundamental frequency. Because of this, high frequency losses can occur in different parts of the drive/motor. Particularly in fault tolerant machines, it is necessary to have complete electrical and magnetic isolation between different windings or winding channels so as not to propagate electrical faults through the system. This can be hard to achieve using conventional methods, as connections between coils of same phases have to pass over end windings of other phases or connections to form neutral points may pass over other end windings.

Losses can be addressed by, for example, using thinner laminations to form the stator or rotor core and/or by using multi-stranded wire (e.g. Litz wires) for the windings, so as to reduce eddy current effects, proximity effects and circulating currents within the conductor bundle, and the associated losses. The use and advantages of multi-strand wires in AC motors is well-known in the field and will not be described further here. Eddy currents in the magnets of permanent magnet motors can be reduced by segmenting the magnets in the radial and axial directions as is also known in the art.

In low frequency applications, multi-strand wire may be simplified to single core magnet wire, since eddy current losses are reduced.

Although known solutions exist for reducing losses in the core, coils and magnets, losses still arise due to connections between different parts of the drive/motor. It is difficult to make low resistance connections between different parts of the windings, or to connect windings in star configurations and/or to connect the windings to external system components. Connecting using soldering or brazing increases resistance and, therefore, introduces losses. Soldering or brazing multi-strand wires can take away from the advantageous effects of the multi-strand wire construction by fusing the individual wires together at the weld. Conventionally, in motors, windings are connected by passing leads from the different phases over end-windings which add bulk to the system and require additional insulation for electrical isolation.

To address these issues, it has recently become more common to provide the connection assembly for providing electrical connection of magnetic wire conductors to another component, as a printed circuit board, PCB, whereby the conductor can be connected to a conductive segment or track of the PCB which is also connected to the other component. More specifically, motors are now being designed where the end windings are provided in the form of a PCB.

The use of an end winding PCB is advantageous in several respects. In particular, it simplifies the final termination step of forming the motor and provides additional degrees of freedom regarding routing to any housing connectors etc.

Electric motors or machines, including those with PCB end windings, are generally connected to and driven by a motor drive. Conventionally, various functions are provided by the motor drive in addition to controlling the driving of the motor. Such functions include transmission line termination components which motor and motor drive systems are, in many applications, required to have in order to satisfy industry regulations. Adding additional functions to the motor drive increases its size, weight, cost and complexity.

Motor drive arrangements are disclosed in EP 3 135 915 A1 and WO 2020/115418 A1.

There is a desire to reduce the size, weight, cost and complexity of a motor and motor drive assembly.

### SUMMARY

The inventors have taken advantage of the use of PCB's used to form the end windings of a motor to incorporate some functions that are conventionally provided in the motor drive in the end winding PCB i.e. at the motor instead. The PCB is already used as the end winding and has the capability of including more functions without any increase in size or weight. This means that the components performing these features can be removed from the motor drive.

Accordingly, there is provided an electric motor as defined by claims 1 and 2 and a method of protecting an electric motor as defined by claims 8 and 9.

### BRIEF DESCRIPTION

Examples according to the disclosure will now be described with reference to the drawings. These are by way of example only and variations are possible within the scope of the claims.
Figure 1 shows a motor with an end winding PCB according to the disclosure.
Figure 2 shows a circuit diagram of one possible embodiment according to the disclosure.
Figure 3 shows a circuit diagram of another possible embodiment according to the disclosure

### DETAILED DESCRIPTION

As is known, electric motors include a rotor and a stator, conductive coils and magnets, to generate electrical energy. Such motors are well known and will not be described in detail. Connections have to be made between the various windings in the motor as well as connections between the motor parts and external systems.

Many motors use multi-strand wire bundles to form the conductors for the windings so as to minimise eddy currents. It is difficult to connect such windings to each other or to other components without negating the multi-strand effect and/or creating an increased resistance at the connection that results in increased losses.

In conventional motors, different windings are electrically connected to each other by physically overlapping the windings and/or by providing end-windings extending from the ends of the motor where conductors of different phases of the motor pass over the end-windings to form a connection with each other. The end-windings are large and it is, as mentioned above, difficult to provide the necessary electrical and magnetic isolation when the conductors physically overlap each other. Connecting the conductors to other components of the motor or of external systems often uses soldering or brazing which fuses the multi-strand wires together at the ends of the coils.

More recently, motors have been designed in which connections for such conductors either to each other or to other components are provided by means of a printed circuit board (PCB) 10 and, in particular, a heavy copper PCB. The heavy copper PCB allows for the segmentation of the copper into a number of layers, allowing the PCB to be used at high frequencies and for electrical isolation between the different windings since the windings do not need to physically overlap in order to be electrically connected. Using a PCB enables, for example, the windings to be segmented and electrically connected via PCB traces, which improves their use in high frequency operations.

Further, the PCB 10 can be designed such that a bundle of multi-strand wires can be terminated with a stud or a crimp at the ends of the wires, and the stud or crimp providing a phase terminal 20 physically attached to the PCB by means of the stud without the need to solder or braze the wires. This allows for quick assembly and provides a lower resistance path and a more reliable connection than a solder or braze. Particularly at higher temperatures, soldered or brazed connections can fatigue and present a higher resistance path. Other interconnect technologies can also be adopted, depending on the application e.g. a compliant pin.

The use of a PCB as an interconnecting mechanism for all connections provides consistency and ease of design and manufacture. A heavy copper PCB is able to carry higher currents without problems of isolation or losses. The use of a PCB instead of overlapping of magnet wire end-windings also results in a more compact motor design.

The inventors have realised that when a PCB is used as the end winding of the motor, additional circuitry could be provided on the PCB to provide additional functions at the motor, without the need to add to the overall size and weight of the motor. This allows functions to be moved from the motor drive to the motor.

In particular, transmission line termination features can be moved from the motor drive, as is conventionally the case, to the motor end winding PCB.

First, by way of background, transmission line effects will be described briefly.

An electric motor is driven by a motor drive that is typically connected to the motor via cables. These cables can be very long and have a characteristic impedance. The motor impedance, however, will usually be several orders of magnitude greater than the characteristic impedance of the cables. This can give rise to large voltage overshoots and large oscillations when the motor is driven by a pulse wave modulated (PWM) inverter and these effects increase with increasing cable length. If a pulse takes longer than half the voltage pulse rise time to travel along the cable, the motor will experience a pulse amplitude of approximately twice that of the driving voltage pulse. Motor drives are now being developed with semiconductor switches having increased switching speed, which leads to these problematic effects even in shorter cables. The higher voltage causes damage to motor winding insulation. Further, the large oscillations cause EMI issues due to parasitic capacitances.

Conventionally, termination components or filters have been provided along or at the ends of the cables. Such filters may be RLC filters, dv/dt filters, RL filters, LC sine filters etc. Proposals have also been made to incorporate RC load termination devices in a conventional, classically-wound motor. Such termination is known as a Zobal network. These devices typically have greater volumetric efficiency than cable filters. It is, however, difficult to reliably mount these devices to the motor windings or parts and so they are not commonly used, especially for motors used in harsh environments such as vehicle or aircraft motors.

The present disclosure solves these problems by incorporating RC terminator devices 40 onto a pcb 10 that is used as a motor end winding.

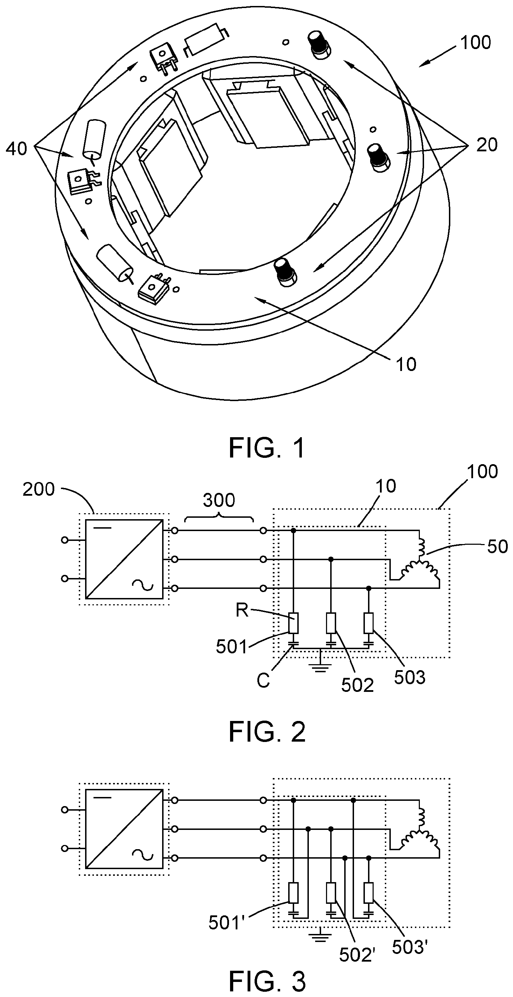

Circuit diagrams showing two possible implementations of the invention are shown in Figs. 2 and 3.

Figure 3 shows a possible arrangement for e.g. classical aircraft where the line termination can be provided via the chassis. Fig. 2 shows the motor, or machine 100 which is connected to a motor drive 200 via cables (also called a harness) 300 for the phases of the motor. Fig. 2 shows a three phase motor represented by windings 50 to which the end winding PCB 10 is connected. A termination device 501, 502, 503 is connected to the PCB 10 between each phase and earth. Each termination device includes a resistor R and a capacitor C connected in series.

For more modern aircraft, regulations prevent current being shunted through the chassis and so termination can be provided using a differential mode topology such as shown in Fig. 3. The components are as described in relation to Fig. 2 except, rather than being earthed through the chassis, the RC load termination devices are connected as shunts across the phase lines.

Such an arrangement can be used for aircraft. The arrangement of the invention also, however, has other applications e.g. in the automotive industry.

The advantage of the invention is that functionality can be distributed to a line replaceable unit (LRU) - i.e. the end winding PCB which is, in any case, present and typically has additional unused space/volume that can be utilised. Further, the termination function is provided close to where the hazard occurs i.e. at the motor.

## Claims

1. An electric motor comprising:
a stator;
a rotor; and
a printed circuit board, pcb, (10) mounted to an end of the motor, the motor end windings being provided as connections on the pcb;
**characterised by**:
the motor being a three-phase motor, the motor further comprising on the pcb three RC load termination components (501, 502, 503), each RC load termination component connected between a respective phase line and earth.

2. An electric motor comprising:
a stator;
a rotor; and
a printed circuit board, pcb, (10) mounted to an end of the motor, the motor end windings being provided as connections on the pcb;
**characterised by**:
the motor being a three-phase motor, the motor further comprising on the pcb three RC load termination components (501', 502', 503'), each RC load termination component connected as a shunt across a respective phase line.

3. An electric motor as claimed in claim 1 or 3, wherein the pcb is a heavy copper pcb.

4. An electric motor as claimed in claim 1, 2 or 3, wherein the pcb has multiple layers.

5. An electric motor as claimed in any of claims 1 to 4, the motor being an aircraft engine.

6. An electric motor as claimed in any of claims 1 to 5, the RC load termination components each comprising a resistor and a capacitor connected in series.

7. A motor and motor drive assembly comprising a motor drive and an electric motor as claimed in any preceding claim, the motor drive connected to the motor via cables.

8. A method of protecting an electric motor from line transmission effects, the electric motor comprising a stator, a rotor and a printed circuit board, pcb, (10) mounted to an end of the motor, the motor end windings being provided as connections on the pcb;
the method comprising providing on the pcb three RC load termination components (501, 502, 503), each RC load termination component connected between a respective phase line and earth, providing end winding structures on the printed circuit board, connecting the printed circuit board at the end of the electric motor.

9. A method of protecting an electric motor from line transmission effects, the electric motor comprising a stator, a rotor and a printed circuit board, pcb, (10) mounted to an end of the motor, the motor end windings being provided as connections on the pcb;
the method comprising providing on the pcb three RC load termination components (501', 502', 503'), each RC load termination component connected between as a shunt across a respective phase line, providing end winding structures on the printed circuit board, connecting the printed circuit board at the end of the electric motor.

## Patentansprüche

1. Elektromotor, umfassend:
einen Stator;
einen Rotor; und
eine gedruckte Leiterplatte, PCB, (10), die an einem Ende des Motors montiert ist, wobei die Motorwicklungen als Verbindungen auf der PCB bereitgestellt sind;
**dadurch gekennzeichnet, dass**:
der Motor ein Dreiphasenmotor ist, wobei der Motor ferner auf der PCB drei RC-Lastabschlusskomponenten (501, 502, 503) umfasst, wobei jede RC-Lastabschlusskomponente zwischen einer jeweiligen Phasenleitung und Masse verbunden ist.

2. Elektromotor, umfassend:
einen Stator;
einen Rotor; und
eine gedruckte Leiterplatte, PCB, (10), die an einem Ende des Motors montiert ist, wobei die Motorwicklungen als Verbindungen auf der PCB bereitgestellt sind;
**dadurch gekennzeichnet, dass**:
der Motor ein Dreiphasenmotor ist, wobei der Motor ferner auf der PCB drei RC-Lastabschlusskomponenten (501', 502', 503') umfasst, wobei jede RC-Lastabschlusskomponente als ein Shunt über eine jeweilige Phasenleitung verbunden ist.

3. Elektromotor nach Anspruch 1 oder 3, wobei die PCB eine schwere Kupfer-PCB ist.

4. Elektromotor nach Anspruch 1, 2 oder 3, wobei die PCB mehrere Schichten aufweist.

5. Elektromotor nach einem der Ansprüche 1 bis 4, wobei der Motor ein Luftfahrzeugtriebwerk ist.

6. Elektromotor nach einem der Ansprüche 1 bis 5, wobei die RC-Lastabschlusskomponenten jeweils einen Widerstand und einen Kondensator umfassen, die in Reihe verbunden sind.

7. Motor- und Motorantriebsbaugruppe, umfassend einen Motorantrieb und einen Elektromotor nach einem der vorhergehenden Ansprüche, wobei der Motorantrieb über Kabel mit dem Motor verbunden ist.

8. Verfahren zum Schützen eines Elektromotors vor Leitungsübertragungseffekten, wobei der Elektromotor einen Stator, einen Rotor und eine gedruckte Leiterplatte, PCB, (10) umfasst, die an einem Ende des Motors montiert ist, wobei die Motorendwicklungen als Verbindungen auf der PCB bereitgestellt sind;
wobei das Verfahren Bereitstellen von drei RC-Lastabschlusskomponenten (501, 502, 503) auf der PCB, wobei jede RC-Lastabschlusskomponente zwischen einer jeweiligen Phasenleitung und Masse verbunden ist, Bereitstellen von Endwicklungskonstruktionen auf der gedruckten Leiterplatte, Verbinden der gedruckten Leiterplatte an dem Ende des Elektromotors umfasst.

9. Verfahren zum Schützen eines Elektromotors vor Leitungsübertragungseffekten, wobei der Elektromotor einen Stator, einen Rotor und eine gedruckte Leiterplatte, PCB, (10) umfasst, die an einem Ende des Motors montiert ist, wobei die Motorendwicklungen als Verbindungen auf der PCB bereitgestellt sind;
wobei das Verfahren Bereitstellen von drei RC-Lastabschlusskomponenten (501', 502', 503') auf der PCB, wobei jede RC-Lastabschlusskomponente als ein Shunt über eine jeweilige Phasenleitung verbunden ist, Bereitstellen von Endwicklungskonstruktionen auf der gedruckten Leiterplatte, Verbinden der gedruckten Leiterplatte an dem Ende des Elektromotors umfasst.

## Revendications

1. Moteur électrique comprenant :
un stator ;
un rotor ; et
une carte de circuit imprimé, pcb, (10) montée sur une extrémité du moteur, les enroulements de tête du moteur étant prévus sous forme de connexions sur la pcb ;
**caractérisée en ce que** :
le moteur est un moteur triphasé, le moteur comprenant en outre sur la pcb trois composants de terminaison de charge RC (501, 502, 503), chaque composant de terminaison de charge RC étant connecté entre une ligne de phase respective et la terre.

2. Moteur électrique comprenant :
un stator ;
un rotor ; et
une carte de circuit imprimé, pcb, (10) montée sur une extrémité du moteur, les enroulements de tête du moteur étant prévus sous forme de connexions sur la pcb ;
**caractérisée en ce que** :
le moteur est un moteur triphasé, le moteur comprenant en outre sur la pcb trois composants de terminaison de charge RC (501', 502', 503'), chaque composant de terminaison de charge RC étant connecté sous forme de shunt aux bornes d'une ligne de phase respective.

3. Moteur électrique selon la revendication 1 ou 3, dans lequel la pcb est une pcb en cuivre épais.

4. Moteur électrique selon la revendication 1, 2 ou 3, dans lequel la pcb présente de multiples couches.

5. Moteur électrique tel que revendiqué dans l'une quelconque des revendications 1 à 4, le moteur étant un moteur d'aéronef.

6. Moteur électrique selon l'une quelconque des revendications 1 à 5, les composants de terminaison de charge RC comprenant chacun une résistance et un condensateur connectés en série.

7. Ensemble moteur et entraînement de moteur comprenant un entraînement de moteur et un moteur électrique selon une quelconque revendication précédente, l'entraînement de moteur étant connecté au moteur via des câbles.

8. Procédé de protection d'un moteur électrique contre les effets de ligne de transmission, le moteur électrique comprenant un stator, un rotor et une carte de circuit imprimé, pcb, (10) montée sur une extrémité du moteur, les enroulements de tête du moteur étant prévus sous forme de connexions sur la pcb ;
le procédé comprenant la fourniture sur la pcb de trois composants de terminaison de charge RC (501, 502, 503), chaque composant de terminaison de charge RC étant connecté entre une ligne de phase respective et la terre, la fourniture de structures d'enroulement de tête sur la carte de circuit imprimé, le raccordement de la carte de circuit imprimé au niveau de l'extrémité du moteur électrique.

9. Procédé de protection d'un moteur électrique contre les effets de ligne de transmission, le moteur électrique comprenant un stator, un rotor et une carte de circuit imprimé, pcb, (10) montée sur une extrémité du moteur, les enroulements de tête du moteur étant prévus sous forme de connexions sur la pcb ;
le procédé comprenant la fourniture sur la pcb de trois composants de terminaison de charge RC (501', 502', 503'), chaque composant de terminaison de charge RC étant connecté sous forme de shunt aux bornes d'une ligne de phase respective, la fourniture de structures d'enroulement de tête sur la carte de circuit imprimé, le raccordement de la carte de circuit imprimé au niveau de l'extrémité du moteur électrique.
